# EUROPÄISCHE PATENTANMELDUNG

(11) **EP 4 815 268 A1**
(43) Veröffentlichungstag der Anmeldung: **30.09.2026**
(21) Anmeldenummer: 26157426.3
(22) Anmeldetag: 10.02.2026
(51) Int. Cl.: H02K 5/20, H02K 9/19, H02K 11/33

(54) **ELEKTRISCHE ANTRIEBSEINHEIT EINES FAHRZEUGS**

(30) Priorität: 24.03.2025 DE 102025111280
(71) Anmelder: ZF CV Systems Global GmbH, 3006 Bern (CH)
(72) Erfinder: KORTLANG, Tobias, 30989 Gehrden (DE); KOCH, Tobias, 30539 Hannover (DE)
(74) Vertreter: Copi, Joachim

(57) **Zusammenfassung**

Die Erfindung betrifft eine elektrische Antriebseinheit (2) eines Fahrzeugs, mit einer Elektromaschine (4), die ein Motorgehäuse (8) und wenigstens einen, zumindest teilweise an dem Motorgehäuse (8) angeordneten sowie von einem flüssigen Kühlmittel durchströmbaren Kühlkanal (12) aufweist, und mit einer elektronischen Steuereinheit (6), die ein am Motorgehäuse (8) befestigtes Steuergehäuse (14) aufweist, in dem mindestens eine mit Leistungshalbleitern (20) bestückte Leiterplatte (18) befestigt ist, und bei dem auch die Leistungshalbleiter (20) mittels des Kühlmittels kühlbar angeordnet sind. Diese Antriebseinheit sieht zur Verbesserung der Kühlung zumindest der Leistungshalbleiter (20) vor, dass das Steuergehäuse im Bereich seiner motorgehäusenahen Wand (16) einen mit dem Kühlkanal (12) des Motorgehäuses (8) strömungsverbundenen, eingangsseitigen Kühlkanalabschnitt (12a) aufweist, dass dieser Kühlkanalabschnitt senkrecht zur Strömungsrichtung (40b) des Kühlmittels in Richtung zur steuergerätnahen Stirnseite (19) des Motorgehäuses offen ausgebildet ist, dass dieser Kühlkanalabschnitt (12a) von dem Motorgehäuse fluiddicht abgedeckt ist, dass dieser Kühlkanalabschnitt zumindest gegenüber seinem offenen Bereich von einer an dem Steuergehäuse (14) ausgebildeten und sich in Strömungsrichtung erstreckenden Kühlkanalwand (15) fluiddicht begrenzt ist, dass sich die Leiterplatte (18) benachbart zu dem Kühlkanalabschnitt fluidfern, parallel sowie mit Abstand zur Kühlkanalwand (15) des Steuergehäuses (14) erstreckt, und dass die Bestückungsseite der Leiterplatte (18) mit den dort angeordneten Leistungshalbleitern (20) zur Kühlkanalwand (15) des Steuergehäuses (14) weist.

## Beschreibung

Die Erfindung betrifft eine elektrische Antriebseinheit eines Fahrzeugs, mit einer Elektromaschine, welche ein Motorgehäuse und wenigstens einen, zumindest teilweise an dem Motorgehäuse angeordneten sowie von einem flüssigen Kühlmittel durchströmbaren Kühlkanal aufweist, und mit einer elektronischen Steuereinheit, welche ein an dem Motorgehäuse befestigtes Steuergehäuse aufweist, in welchem mindestens eine mit Leistungshalbleitern bestückte Leiterplatte befestigt ist, und bei dem auch die Leistungshalbleiter mittels des Kühlmittels kühlbar angeordnet sind.

Eine Elektromaschine eines Elektro- oder Hybridfahrzeugs kann wechselweise als Motor oder als Generator betrieben werden. Hierzu weist die zugeordnete elektronische Steuereinheit eine Steuerungselektronik und eine Leistungselektronik (Inverter) auf. Mittels der Steuerungselektronik werden der Fahrzustand des Fahrzeugs sowie die Leistungsanforderung eines Fahrers ermittelt und die Leistungselektronik diesen Vorgaben entsprechend angesteuert. In der Leistungselektronik, die Leistungshalbleiter, insbesondere Leistungstransistoren, wie MOSFETs (Metal-Oxide-Semiconductor Field-Effect Transistor), IGBTs (Insulated-Gate-Bipolar-Transistor) und/oder HEMTs (High-Electronic-Mobility Transistor) aufweist, wird im Motorbetrieb der Elektromaschine der Gleichstrom einer Traktionsbatterie in einen Mehrphasen-Wechselstrom der Elektromaschine sowie im Generatorbetrieb der Elektromaschine der Mehrphasen-Wechselstrom der Elektromaschine in einen Gleichstrom der Traktionsbatterie umgewandelt. Da sich die Leistungshalbleiter dabei aufgrund der dabei fließenden hohen elektrischen Ströme vergleichsweise stark erwärmen ist deren Kühlung erforderlich, um temperaturbedingte Fehlfunktionen und Schäden zu vermeiden. Aufgrund ihrer guten Wärmeübertragungsfähigkeit und ihrer hohen Wärmekapazität kommen bei der Kühlung der Leistungshalbleiter bevorzugt flüssige Kühlmittel zur Anwendung.

Aus der DE 198 17 333 C1 ist eine elektronische Antriebseinheit eines Fahrzeugs bekannt, bei der ein gemeinsamer Kühlkreislauf zur Kühlung der Elektromaschine und der elektronischen Steuereinheit vorgesehen ist. Das Steuergehäuse der elektronischen Steuereinheit ist mit einer Aussparung derart tangential an dem Motorgehäuse der Elektromaschine befestigt, dass ein mit einem Kühlkanal der Elektromaschine verbundenes Kühlereinlegeteil in die Aussparung eingreift.

In der DE 10 2014 016 171 A1 ist eine elektrische Antriebseinheit eines Fahrzeugs beschrieben, bei der das Steuergehäuse der elektronischen Steuereinheit über ein vollflächiges Wärmeleitelement, wie eine Wärmleitfolie oder einen Wärmeleitklebstoff, tangential an dem mit einem umlaufenden Kühlkanal versehenen Motorgehäuse der Elektromaschine befestigt ist.

Aus der DE 10 2017 202 970 A1 ist dagegen eine elektrische Antriebseinheit für stationäre Anwendungen bekannt, bei der das Steuergehäuse der elektronischen Steuereinheit über eine von einem Kühlkanal durchsetzte Kühlplatte tangential an dem Motorgehäuse des Elektromotors befestigt ist, wobei der Kühlkanal der Kühlplatte einem Kühlkanal des Elektromotors seriell vorgeschaltet ist.

Während bei den genannten elektrischen Antriebseinheiten die Leistungshalbleiter der elektronischen Steuereinheiten nur mittelbar, also mittels Wärmestrahlung und Konvektion der im Steuergehäuse eingeschlossenen Luft durch das Kühlmittel der Elektromaschine gekühlt werden, ist in einer elektronischen Steuereinheit einer elektrischen Antriebseinheit eines Fahrzeugs gemäß der DE 10 2020 216 316 A1 ein mit Leiterplatten in Kontakt stehender Kühlkörper zur Kühlung der Leistungshalbleiter vorgesehen. In dem Kühlkörper sind mehrere von einem flüssigen Kühlmittel durchströmbare Kühlkanäle, die jeweils einer Phase der Wechselrichterhalbleiter zugeordnet sind, mit separaten Einlass- und Auslasskanälen parallel geschaltet angeordnet.

In der DE 10 2019 214 565 A1 ist dagegen eine elektronische Steuereinheit einer elektrischen Antriebseinheit eines Fahrzeugs beschrieben, bei der das Steuergehäuse zur Kühlung der Leistungshalbleiter unmittelbar von einem flüssigen, elektrisch nicht leitenden Kühlmittel durchströmbar ist.

Bei einer ähnlichen Kühlungsanordnung einer elektronischen Steuereinheit mit unmittelbare Durchströmung des Steuergehäuses mit einem Kühlmittel gemäß der DE 10 2023 206 563 A1 ist vorgesehen, dass ein Teil des Kühlmittels zunächst über eine mit Leistungshalbleitern bestückte erste Leiterplatte und ein anderer Teil des Kühlmittels beabstandet daran vorbei geführt wird, und dass nach dem Passieren eines Überleitungselementes der andere Teil des Kühlmittels über eine mit Leistungshalbleitern bestückte zweite Leiterplatte und der eine Teil des Kühlmittels beabstandet daran vorbei geführt wird.

Angesichts der Gefahr von Leckagen bei vollständig durch das Steuergehäuse verlaufenden Kühlkanälen und von temperaturbedingten Korrosionsschäden an Leiterbahnen sowie Kontakten von Halbleitern bei einer Durchströmung des Steuergehäuses mit einem Kühlmittel besteht die an die vorliegende Erfindung gerichtete Aufgabe darin, eine elektrische Antriebseinheit eines Fahrzeugs der eingangs genannten Bauart mit einer wirksamen, dauerhaft zuverlässigen und kostengünstig herstellbaren Kühlvorrichtung für die Leistungshalbleiter der elektronischen Steuereinheit vorzustellen.

Diese Aufgabe ist durch eine Antriebseinheit eines Fahrzeugs mit den Merkmalen des Anspruchs 1 gelöst. Vorteilhafte Weiterbildungen sind in den abhängigen Ansprüchen definiert.

Die Erfindung betrifft demnach eine elektrische Antriebseinheit eines Fahrzeugs, mit einer Elektromaschine, welche ein Motorgehäuse und wenigstens einen, zumindest teilweise an dem Motorgehäuse angeordneten sowie von einem flüssigen Kühlmittel durchströmbaren Kühlkanal aufweist, und mit einer elektronischen Steuereinheit, welche ein an dem Motorgehäuse befestigtes Steuergehäuse aufweist, in welchem mindestens eine mit Leistungshalbleitern bestückte Leiterplatte befestigt ist, und bei dem auch die Leistungshalbleiter mittels des Kühlmittels kühlbar angeordnet sind.

Zur Lösung der erwähnten Aufgabe ist bei dieser Antriebseinheit vorgesehen, dass das Steuergehäuse im Bereich seiner motorgehäusenahen Wand einen mit dem Kühlkanal des Motorgehäuses strömungsverbundenen, eingangsseitigen Kühlkanalabschnitt aufweist, dass dieser Kühlkanalabschnitt senkrecht zur Strömungsrichtung des Kühlmittels in Richtung zur steuergerätnahen Stirnseite des Motorgehäuses offen ausgebildet ist, dass dieser Kühlkanalabschnitt von dem Motorgehäuse fluiddicht abgedeckt ist, dass dieser Kühlkanalabschnitt zumindest gegenüber seinem offenen Bereich von einer an dem Steuergehäuse ausgebildeten und sich in Strömungsrichtung erstreckenden Kühlkanalwand fluiddicht begrenzt ist, dass sich die Leiterplatte benachbart zu dem Kühlkanalabschnitt fluidfern, parallel sowie mit Abstand zur Kühlkanalwand des Steuergehäuses erstreckt, und dass die Bestückungsseite der Leiterplatte mit den dort angeordneten Leistungshalbleitern zur Kühlkanalwand des Steuergehäuses weist.

Durch die Ausbildung eines eingangsseitigen Kühlkanalabschnitts des Kühlkanals der Antriebseinheit in dem Steuergehäuse sind die Wand des Kühlkanalabschnitts sowie die steuergerätnahe Stirnseite des Motorgehäuses im Betrieb der Antriebseinheit als Kühlkörper wirksam, sodass auf einen separaten Kühlkörper für die elektronischen Bauteile, insbesondere für die Leistungshalbleiter, herstellkostensparend verzichtet werden kann. Die vergleichsweise große Oberfläche des eingangsseitigen Kühlkanalabschnitts sowie der unmittelbar benachbarten Stirnseite des Motorgehäuses bewirken eine besonders gute Wärmeableitung von den Leistungshalbleitern in das flüssige Kühlmittel sowie in das Motorgehäuse.

Durch die beanspruchte Anordnung der Leiterplatte werden die dort platzierten Leistungshalbleiter zumindest durch Wärmestrahlung, jedoch vornehmlich durch Konvektion in dem im Kühlkanal geführten Kühlmittel optimal gekühlt. Dies vor allem auch deshalb, weil das Kühlmittel eingangsseitig noch kalt ist und erst nach dem Passieren des eingangsseitigen Abschnittes des Kühlkanals zur Kühlung der Elektromaschine durch das Motorgehäuse geleitet wird.

Eine weitere Verbesserung der Kühlung der Leistungshalbleiter kann in Weiterbildung der Erfindung dadurch erreicht werden, dass die Kühlkanalwand des Steuergehäuses zumindest im Bereich der Leistungshalbleiter eine zur Leiterplatte gerichtete Ausbuchtung oder Delle aufweist, und dass die Leistungshalbleiter im Bereich dieser Ausbuchtung oder Delle durch die Anordnung eines Wärmeleitmittels mit der Kühlkanalwand des Steuergehäuses thermisch in Kontakt sind. Somit werden die Leistungshalbleiter durch die Abfuhr der Wärme über die Wärmeleitmittel und die Kühlkanalwand des Steuergehäuses in das Kühlmittel noch wirksamer gekühlt. Als Wärmeleitmittel kommen beispielsweise Wärmeleitpads und/oder Wärmeleitpaste zur Anwendung.

Damit sich in der Ausbuchtung des Kühlkanals keine Totwasserströmung mit geringer Wärmeabfuhr einstellt, sondern auch dieser Bereich des Kühlkanals besonders gut von dem Kühlmittel durchströmt wird, ist hinsichtlich der Variante mit der erwähnten Ausbuchtung vorgesehen, dass zur Strömungsleitung des Kühlmittels und damit zur optimalen Kühlung der Leistungshalbleiter ein in den Strömungskanalbereich der Ausbuchtung der Kühlkanalwand des Steuergehäuses hineinragender Quersteg angeordnet ist, welcher an dem zur Steuereinheit weisenden Stirnseite des Motorgehäuses befestigt oder ausgebildet ist.

Das Steuergehäuse ist vorzugsweise mittels eines abnehmbaren Deckels verschließbar, sodass die Leistungshalbleiter gegen Umwelteinflüsse geschützt sind.

Gemäß einer anderen Weiterbildung der die Merkmale der Erfindung aufweisenden elektrischen Antriebseinheit ist vorgesehen, dass der eingangsseitige Kühlkanalabschnitt im Steuergehäuse eine im Wesentlichen rinnenförmige Querschnittsgeometrie aufweist, dass der eingangsseitige Kühlkanalabschnitt von einer planen, zum Steuergehäuse weisenden Stirnseite des Motorgehäuses fluiddicht abgedeckt ist, und dass im Bereich des eingangsseitigen Kühlkanalabschnitts in der Stirnseite des Motorgehäuses eine Durchlassöffnung zum Durchströmen des Kühlmittels hinein in den motorseitigen Kühlkanal ausgebildet ist.

Diese Variante ist vergleichsweise einfach und kostengünstig herstellbar, weil der eingangsseitige Kühlkanalabschnitt rinnenförmig und ausschließlich im Steuergehäuse ausgebildet ist. Ein solches Steuergehäuse lässt sich vergleichsweise einfach als ein einstückiges Leichtmetall-Gussteil herstellen, zumal dieses Material eine hohe Wärmeleitfähigkeit aufweist.

Alternativ zu der gerade beschriebenen Bauform kann vorgesehen sein, dass in der zum Motorgehäuse weisenden Stirnseite des Steuergehäuses sowie in der zum Steuergehäuse weisenden Stirnseite des Motorgehäuses jeweils ein rinnenförmiger Kühlkanalabschnitt ausgebildet ist, dass die beiden rinnenförmigen Kühlkanalabschnitte geometrisch derart identisch ausgebildet und angeordnet sind, dass sie im zusammengebauten Zustand gemeinsam einen rohrförmigen Kühlkanalabschnitt bilden, und dass in dem rinnenförmigen Kühlkanalabschnitt des Motorgehäuses eine Durchlassöffnung zum Durchströmen des Kühlmittels hinein in den motorseitigen Kühlkanal ausgebildet ist.

Diese Konstruktion hat den Vorteil, dass durch die Ausbildung eines rinnenförmigen Kühlkanalabschnitts auch in der steuergerätnahen Stirnseite des Motorgehäuses die zur Kühlung vorhandene motorgehäuseseitige Oberfläche im Vergleich zur ersten Variante vergrößert ist.

Die Erfindung wird nachstehend anhand von in der beigefügten Zeichnung dargestellten Ausführungsbeispielen weiter erläutert. In der Zeichnung zeigt
Fig. 1 in einer Längsschnittansicht eine erfindungsgemäße elektrische Antriebseinheit eines Fahrzeugs gemäß einer ersten Ausführungsform, mit einer Elektromaschine und einer elektronischen Steuereinheit,
Fig. 2 die elektronische Steuereinheit gemäß der Fig. 1 in einer perspektivischen Ansicht mit Blick in einen rinnenförmigen eingangsseitigen Kühlkanalabschnitt des Steuergehäuses, und
Fig. 3 in einer perspektivischen Ansicht das Gehäuse einer Elektromaschine der Antriebseinheit ähnlich der gemäß Fig. 1, und zwar mit Blick in einen rinnenförmigen eingangsseitigen Kühlkanalabschnitt des Motorgehäuses.

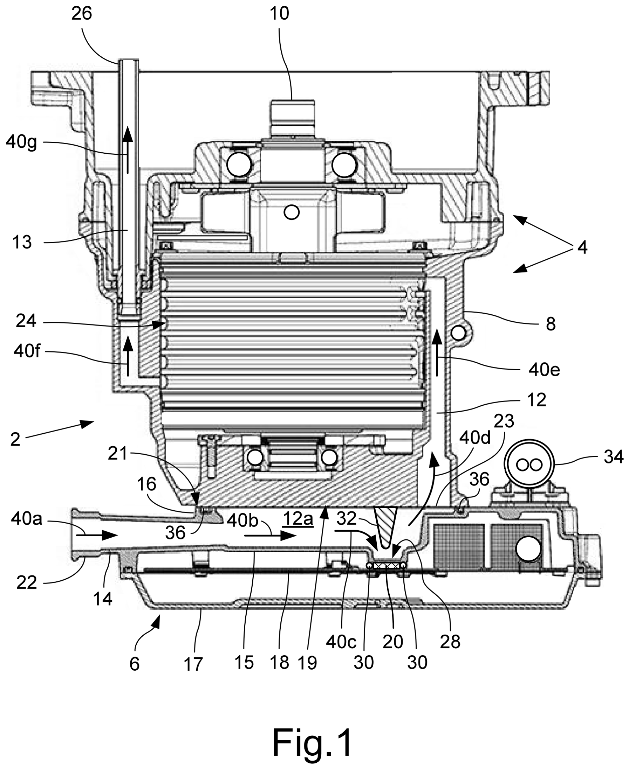

Die Fig. 1 zeigt demnach in einem Längsschnitt eine elektrische Antriebseinheit 2 eines Fahrzeugs mit einer Elektromaschine 4 und einer elektronischen Steuereinheit 6. Die Elektromaschine 4 weist ein Motorgehäuse 8, eine in dem Motorgehäuse 8 drehbar gelagerte Antriebswelle 10 sowie einen größtenteils in dem Motorgehäuse 8 angeordneten, von einem flüssigen Kühlmittel durchströmbaren Kühlkanal 12 auf. Die elektronische Steuereinheit 6 weist ein Steuergehäuse 14 und daran angeordneten abnehmbaren Deckel 17 auf. In dem Steuergehäuse 14 ist eine Leiterplatte 18 befestigt, an welcher Leistungshalbleiter 20 angeordnet sind.

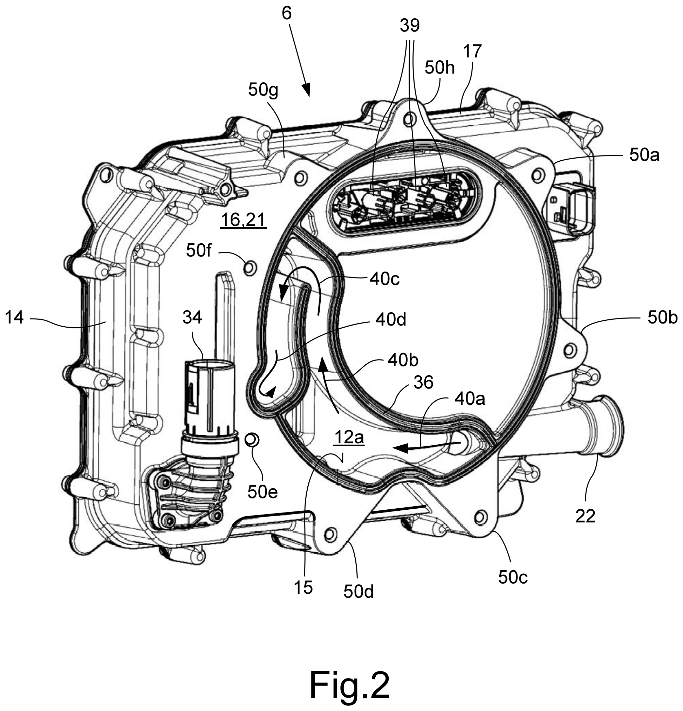

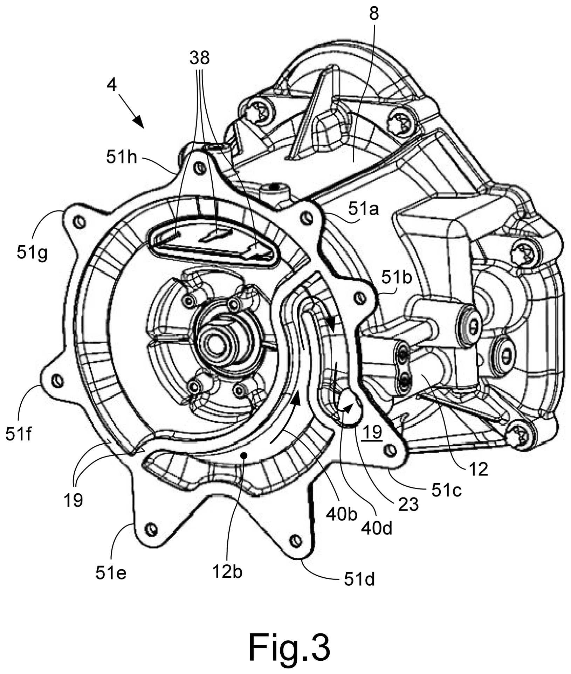

Wie die Figuren 2 und 3 veranschaulichen, sind zur mechanischen Verbindung des Steuergehäuses 14 mit dem Motorgehäuse 8 an dem Steuergehäuse 14 sechs ohrenartig abstehende Befestigungselemente 50a, 50b, 50c, 50d, 50g, 50h sowie zwei Gewindebohrungen 50e, 50f ausgebildet. Diesen steuergehäuseseitigen Befestigungselementen 50a, 50b, 50c, 50d, 50e, 50f, 50g, 50h zugeordnet sind acht ohrenartig abstehende Befestigungselemente 51a, 51b, 51c, 51d, 51e, 51f, 51g, 51h an dem Motorgehäuse 8. Alle erwähnten ohrenartigen Befestigungselemente weisen jeweils eine Bohrung zur Aufnahme von nicht dargestellten Befestigungsschrauben auf, mit deren Hilfe das Steuergehäuse 14 an dem Motorgehäuse 8 abnehmbar befestigbar ist. Wie insbesondere die Fig. 1 zeigt, liegt das Steuergehäuse 14 im montierten Zustand dadurch mit der Stirnseite 21 seiner zum Motorgehäuse 8 weisenden Wand 16 an der antriebswellenfernen Stirnseite 19 des Motorgehäuse 8 an.

In dem Steuergehäuse 14 ist in dem gerade beschriebenen Verbindungsbereich zwischen dem Motorgehäuse 8 und dem Steuergehäuse 14 ein eingangsseitiger Kühlkanalabschnitt 12a ausgebildet, welcher in Richtung zum Motorgehäuse 8 offen ist und dadurch eine rinnenförmige Geometrie aufweist. Dadurch, dass der Kühlkanalabschnitt 12a rinnenförmig ausgebildet ist, kann die Kühlflüssigkeit an die steuergerätnahe Stirnseite 19 des Motorgehäuses 8 gelangen und diesen Gehäusebereich als Kühlfläche für das Kühlmittel nutzen.

Zur Abdichtung dieses eingangsseitigen Kühlkanalabschnitts 12a ist zumindest eine Dichtung 36 in Form eines geeigneten Dichtmittels zwischen den gegeneinander gerichteten Stirnseiten 19, 21 von Motorgehäuse 8 und Steuergehäuse 14 angeordnet. Hierdurch kann keine Kühlflüssigkeit aus dem eingangsseitigen Kühlkanalabschnitt 12a austreten.

Das Steuergehäuse 14 weist zumindest im Bereich des eingangsseitigen Kühlkanalabschnitts 12a eine Kühlkanalwand 15 auf, welche den Kühlkanalabschnitt 12a senkrecht zur Strömungsrichtung der Kühlflüssigkeit begrenzt und dadurch die im eingangsseitigen Kühlkanalabschnitt 12a vorhandene Kühlflüssigkeit von der im Steuergehäuse 14 angeordneten Leiterplatte 18 trennt. In den Figuren ist der Strömungsweg des Kühlmittels mit Richtungspfeilen 40a, 40b, 40c, 40d, 40e, 40f, 40g eingezeichnet.

Die Leiterplatte 18 ist an der kühlflüssigkeitsfernen Seite der Kühlkanalwand 15 auswechselbar befestigt. Die Leiterplatte 18 ist dabei in geringem Abstand parallel in Bezug zur Kühlkanalwand 15 des Steuergehäuses 14 angeordnet und trägt auf ihrer der Kühlkanalwand 15 zugewandten Bestückungsseite die Leistungshalbleiter 20.

Die elektrische Verbindung zumindest der Leistungshalbleiter 20 mit elektrischen Bauteilen der Elektromaschine 4 erfolgt über abgedichtete elektrische Steckkontakte 38 am Motorgehäuse 8 und zugeordnete elektrische Steckkontakte 39 am Steuergehäuse 14. Diese beiderseitigen Steckkontakte 38, 39 werden beim Zusammenbau von Motorgehäuse 8 und Steuergehäuse 14 selbsttätig miteinander verbunden.

Wie die Figuren 1 und 2 zeigen, ist der eingangsseitige Kühlkanalabschnitt 12a eingangsseitig mit einem Eingangsanschluss 22 verbunden, durch den die Kühlflüssigkeit zuführbar ist. Am stromabwärtigen Ende des eingangsseitigen Kühlkanalabschnitt 12a gelangt das Kühlmittel über eine Durchlassöffnung 23 im Motorgehäuse 8 in den dortigen Kühlkanal 12. Dieser Kühlkanal 12 ist innerhalb des Motorgehäuses 8 über einen mehrere separate Kühlleitungen umfassenden Kühlmantel 24 zu einem ausgangsseitigen Abschnitt 13 des Kühlkanals 12 mit einem Ausgangsanschluss 26 geführt.

In den Figuren 1 und 2 ist zudem eine elektrische Steckerbuchse 34 zum elektrischen Anschluss der elektronischen Steuereinheit 6 an ein elektronisches Bordnetz des Fahrzeugs dargestellt. Die Steckerbuchse 34 ist erkennbar an der motornahen Seite des Steuergehäuses 14 befestigt.

Die Fig. 1 zeigt außerdem eine andere vorteilhafte Ausgestaltung der elektrischen Antriebseinheit 2, gemäß welcher die Kühlkanalwand 15 im Bereich der Leistungshalbleiter 20 eine zur Leiterplatte 18 gerichtete Ausbuchtung 28 oder Delle aufweist, an welcher die Leistungshalbleiter 20 über Wärmeleitmittel 30, wie Wärmeleitpads und/oder Wärmeleitpaste, mit der Kühlkanalwand 15 des Steuergehäuses 14 in Kontakt stehen. Hierdurch können die Leistungshalbleiter 20 deren im Betrieb entstehende Abwärme direkt an die Kühlkanalwand 15 und von dort an das Kühlmittel abgeben. Zur guten Durchströmung des Kühlmittels durch den Bereich der Ausbuchtung 28 ist ein in die Ausbuchtung 28 mit sinnvollem Abstand hineinragender Quersteg 32 angeordnet. Dieser Quersteg 32 ist am antriebswellenfernen Ende des Motorgehäuses 8 befestigt oder dort ausgebildet und zwingt das Kühlmittel gemäß dem Richtungspfeil 40c zum Durchströmen dieses Kühlkanalabschnitts.

Bei der in der Fig. 1 dargestellten ersten Variante der elektrischen Antriebseinheit 2 mit den Merkmalen der Erfindung ist vorgesehen, dass lediglich in dem Steuergehäuse 14 der Steuereinheit 6 ein eingangsseitiger Kühlkanalabschnitt 12a ausgebildet ist. Dieser eingangsseitige Kühlkanalabschnitt 12a ist in Richtung zur zugeordneten Stirnseite 19 des Motorgehäuses 8 wie geschildert offen und daher rinnenförmig ausgebildet. Die zugeordnete Stirnseite 19 des Motorgehäuses 8 deckt diesen rinnenförmigen Kühlkanalabschnitt 12a, unterstützt durch das erwähnte Dichtmittel 36, senkrecht zur Strömungsrichtung 40b der Kühlflüssigkeit flüssigkeitsdicht ab.

Bei der in den Figuren 2 und 3 dargestellten zweiten Variante ist in dem Steuergehäuse 14 der Steuereinheit 6 ein erster rinnenförmiger eingangsseitiger Kühlkanalabschnitt 12a sowie in der steuergehäusenahen Stirnseite 19 des Motorgehäuses 8 ein zweiter rinnenförmiger eingangsseitiger Kühlkanalabschnitt 12b ausgebildet. Die beiden rinnenförmigen eingangsseitigen Kühlkanalabschnitte 12a, 12b sind derartig geometrisch identisch ausgebildet und angeordnet, dass sie im zusammengebauten Zustand der elektrischen Antriebseinheit einen rohrförmigen eingangsseitigen Kühlkanalabschnitt 12a/12b bilden. Bei dieser zweiten Konstruktionsvariante steht dem Kühlmittel an der steuergerätnahen Stirnseite 19 des Motorgehäuses 8 eine deutlich größere Kühlfläche zum Abführen von Wärme zur Verfügung als bei der ersten Konstruktionsvariante.

Durch die beschriebene Anordnung der Bestandteile der elektrischen Antriebseinheit lassen sich die Leistungshalbleiter 20 der elektronischen Steuereinheit 6 mit vergleichsweise geringem konstruktivem Aufwand effektiver als bisher kühlen und damit Schäden sowie Fehlfunktionen der elektronischen Steuereinheit 6 vermeiden.

### Bezugszeichenliste (Bestandteil der Beschreibung)

- 2: Elektrische Antriebseinheit
- 4: Elektromaschine
- 6: Elektronische Steuereinheit
- 8: Motorgehäuse der Elektromaschine
- 10: Antriebswelle der Elektromaschine
- 12: Kühlkanal im Motorgehäuse
- 12a: Eingangsseitiger Kühlkanalabschnitt im Steuergehäuse 14
- 12b: Eingangsseitiger Kühlkanalabschnitt im Motorgehäuse 8
- 12a/12b: Rohrförmig Kühlkanalabschnitt (im zusammengebauten Zustand)
- 13: Ausgangsseitiger Kühlkanalabschnitt im Motorgehäuse 8
- 14: Steuergehäuse
- 15: Kühlkanalwand am Steuergehäuse
- 16: Motorgehäusenahe Wand des Steuergehäuses
- 17: Deckel des Steuergehäuses
- 18: Leiterplatte
- 19: Steuergerätnahe Stirnseite des Motorgehäuses
- 20: Leistungshalbleiter
- 21: Stirnseite der motorgehäusenahen Wand des Steuergehäuses
- 22: Eingangsanschluss am Steuergehäuse
- 23: Durchlassöffnung in der steuergerätnahen Stirnseite des Motorgehäuses
- 24: Kühlmantel am Motorgehäuse
- 26: Ausgangsanschluss am Motorgehäuse
- 28: Ausbuchtung an der Kühlkanalwand des Steuergehäuses
- 30: Wärmeleitmittel
- 32: Quersteg am Motorgehäuse
- 34: Elektrische Steckerbuchse am Steuergehäuse
- 36: Dichtung
- 38: Elektrische Steckkontakte am Motorgehäuse
- 39: Elektrische Steckkontakte am Steuergehäuse
- 40a - 40g: Richtungspfeile, Strömungsrichtung des Kühlmittels
- 50a - 50h: Befestigungselemente am Steuergehäuse
- 51a - 51h: Befestigungselemente am Motorgehäuse

## Patentansprüche

1. Elektrische Antriebseinheit (2) eines Fahrzeugs, mit einer Elektromaschine (4), welche ein Motorgehäuse (8) und wenigstens einen, zumindest teilweise an dem Motorgehäuse (8) angeordneten sowie von einem flüssigen Kühlmittel durchströmbaren Kühlkanal (12) aufweist, und mit einer elektronischen Steuereinheit (6), welche ein an dem Motorgehäuse (8) befestigtes Steuergehäuse (14) aufweist, in welchem mindestens eine mit Leistungshalbleitern (20) bestückte Leiterplatte (18) befestigt ist, und bei dem auch die Leistungshalbleiter (20) mittels des Kühlmittels kühlbar angeordnet sind, **dadurch gekennzeichnet, dass** das Steuergehäuse (14) im Bereich seiner motorgehäusenahen Wand (16) einen mit dem Kühlkanal (12) des Motorgehäuses (8) strömungsverbundenen, eingangsseitigen Kühlkanalabschnitt (12a) aufweist, dass dieser Kühlkanalabschnitt (12a) senkrecht zur Strömungsrichtung (40b) des Kühlmittels in Richtung zur steuergerätnahen Stirnseite (19) des Motorgehäuses (8) offen ausgebildet ist, dass dieser Kühlkanalabschnitt (12a) von dem Motorgehäuse (8) fluiddicht abgedeckt ist, dass dieser Kühlkanalabschnitt (12a) zumindest gegenüber seinem offenen Bereich von einer an dem Steuergehäuse (14) ausgebildeten und sich in Strömungsrichtung erstreckenden Kühlkanalwand (15) fluiddicht begrenzt ist, dass sich die Leiterplatte (18) benachbart zu dem Kühlkanalabschnitt (12a) fluidfern, parallel sowie mit Abstand zur Kühlkanalwand (15) des Steuergehäuses (14) erstreckt, und dass die Bestückungsseite der Leiterplatte (18) mit den dort angeordneten Leistungshalbleitern (20) zur Kühlkanalwand (15) des Steuergehäuses (14) weist.

2. Elektrische Antriebseinheit nach Anspruch 1, **dadurch gekennzeichnet, dass** die Kühlkanalwand (15) des Steuergehäuses (14) zumindest im Bereich der Leistungshalbleiter (20) eine zur Leiterplatte (18) gerichtete Ausbuchtung (28) aufweist, und dass die Leistungshalbleiter (20) im Bereich der Ausbuchtung (28) durch die Anordnung eines Wärmeleitmittels (30) mit der Kühlkanalwand (15) des Steuergehäuses (14) thermisch in Kontakt sind.

3. Elektrische Antriebseinheit nach Anspruch 2, **dadurch gekennzeichnet, dass** als Wärmeleitmittel (30) Wärmeleitpads und/oder eine Wärmeleitpaste angeordnet sind.

4. Elektrische Antriebseinheit nach einem der Ansprüche 1 bis 3, **dadurch gekennzeichnet, dass** zur Strömungsleitung des Kühlmittels und damit zur optimalen Kühlung der Leistungshalbleiter (20) ein in den Bereich der Ausbuchtung (28) der Kühlkanalwand (15) des Steuergehäuses (14) hineinragender Quersteg (32) angeordnet ist, welcher an der zur Steuereinheit (6) weisenden Stirnseite (19) des Motorgehäuses (8) befestigt oder ausgebildet ist.

5. Elektrische Antriebseinheit nach einem der Ansprüche 1 bis 4, **dadurch gekennzeichnet, dass** der eingangsseitige Kühlkanalabschnitt (12a) im Steuergehäuse (14) eine im Wesentlichen rinnenförmige Querschnittsgeometrie aufweist, dass der eingangsseitige Kühlkanalabschnitt (12a) von einer planen, zum Steuergehäuse (14) weisenden Stirnseite (19) des Motorgehäuses (8) fluiddicht abgedeckt ist, und dass im Bereich des eingangsseitigen Kühlkanalabschnitts (12a) in der Stirnseite (19) des Motorgehäuses (8) eine Durchlassöffnung (23) zum Durchströmen des Kühlmittels hinein in den motorseitigen Kühlkanal (12) ausgebildet ist.

6. Elektrische Antriebseinheit nach einem der Ansprüche 1 bis 4, **dadurch gekennzeichnet, dass** in der zum Motorgehäuse (8) weisenden Stirnseite (21) des Steuergehäuses (14) sowie in der zum Steuergehäuse (14) weisenden Stirnseite (19) des Motorgehäuses (8) jeweils ein rinnenförmiger Kühlkanalabschnitt (12a, 12b) ausgebildet ist, dass die beiden rinnenförmigen Kühlkanalabschnitte (12a, 12b) geometrisch derart identisch ausgebildet und angeordnet sind, dass sie im zusammengebauten Zustand gemeinsam einen rohrförmig Kühlkanalabschnitt (12a/12b) bilden, und dass in dem rinnenförmigen Kühlkanalabschnitt (12b) des Motorgehäuses (8) eine Durchlassöffnung (23) zum Durchströmen des Kühlmittels hinein in den motorseitigen Kühlkanal (12) ausgebildet ist.

7. Elektrische Antriebseinheit nach einem der Ansprüche 1 bis 5, **dadurch gekennzeichnet, dass** das Steuergehäuse (14) als ein einstückiges Leichtmetall-Gussteil hergestellt ist.
